# EUROPEAN PATENT SPECIFICATION

(11) **EP 1 406 444 B1**
(45) Date of publication and mention of the grant of the patent: **29.11.2006**
(21) Application number: 02388068.5
(22) Date of filing: 01.10.2002
(51) Int. Cl.: H04N 7/14, H04M 1/21, H04M 1/725, G06F 1/16

(54) **Electronic Device with a Camera Mounted behind a Key**
Elektronisches Gerät mit einer hinter einer Taste montierten Kamera
Dispositif électronique avec une camera monte à l'arriere d'une touche

(43) Date of publication of application: 07.04.2004
(73) Proprietor: Sony Ericsson Mobile Communications AB, 221 88 Lund (SE)
(72) Inventor: Schack, Göran, 296 92 Yngsjö (SE); Olsson, Mats, 214 31 Malmö (SE)
(74) Representative: Sundien, Thomas

(56) References cited:
- EP-A- 0 871 148
- US-A1- 2001 055 951
- US-B1- 6 317 609

## Description

### Technical area

The invention relates to an electronic device comprising at least one key button and a camera for recording an image, said at least one key button having a front surface.

### Related prior art

The prior art electronic devices provided with a camera are configured with the camera positioned in a suitable location in the housing of the electronic device. If the electronic device is a portable communications device, such as a mobile or cellular telephone, it is known to arrange the camera on the front surface as shown in e.g. US-A-6 137 525, WO 96/38762 and EP-A2-0 898 405 or on the back surface as shown in e.g. EP-A1-0 963 100. It is also known to provide the camera in a separate unit that is attachable to another electronic device, such as a mobile telephone.

### Object of the invention

Electronic devices - in particular portable electronic devices - tend to be made increasingly smaller in response to a desire from the users. It is therefore becoming increasingly difficult to find space for a camera while still meeting the demands for a small electronic device. Thus, the users have accepted the relatively large size of the prior art electronic devices provided with a camera despite the fact that they are larger than corresponding electronic devices without a camera.

It is therefore an object of the invention to provide an electronic device with an integrated camera in which the camera may be integrated without increasing the size of the electronic device.

### Summary of the invention

The object of the invention is achieved by arranging the electronic device mentioned in the opening paragraph in such manner that the at least one key button is provided with a transparent area at the front surface, and that the camera is located behind said transparent area.

Thereby is achieved that no extra space of the housing of the electronic device has to be allocated particularly for the camera, whereby the size of the electronic device can be kept small.

The key button as such may be made of a transparent material, but preferably the transparent area comprises an opening in the key button. The opening may be closed by a transparent material in order to avoid dust gathering in the opening.

In a preferred embodiment the key button is movably arranged in the electronic device, e.g. by being depressable. Since the camera takes up some space the key button is preferably a navigation key that is movable in a plurality of directions, e.g. by being arranged tiltably about a centre point. In order to have such a navigation key work properly it must have a certain sized and it can easily be configured for accommodating a camera.

Preferably the key button comprises a hollow body, and that at least a part of the camera is located in the hollow body of the key button. Thereby the camera is securely mounted in the electronic device and furthermore it is well encapsulated and protected by the key button.

If the key button is movably arranged in the electronic device the camera may be connected to a PCB (printed circuit board) provided in the electronic device via flexible wires.

In a preferred embodiment the electronic device is a wireless communications device, such as a mobile telephone. Especially in this field there is a large user demand for increasingly smaller devices with extra features.

When the electronic device is a mobile telephone the key button is preferably arranged in the vicinity of a display. Thereby the electronic device is well suitable for video conferencing.

It shall be emphasised that the term "comprise/comprising" when used in this specification is taken to specify the presence of stated features, integers, steps or components but does not preclude the presence or addition of one or more other features, integers, steps components or groups thereof.

### Description of the drawings

The invention will be described in detail in the following with reference to the drawings in which
Fig. 1 shows an electronic device provided with a camera in accordance with the invention;
Fig. 2 shows a cross section through a key button provided with a camera in accordance with the invention; and
Fig. 3 shows an exploded view of a camera and a key button.

### Detailed description of an embodiment of the invention

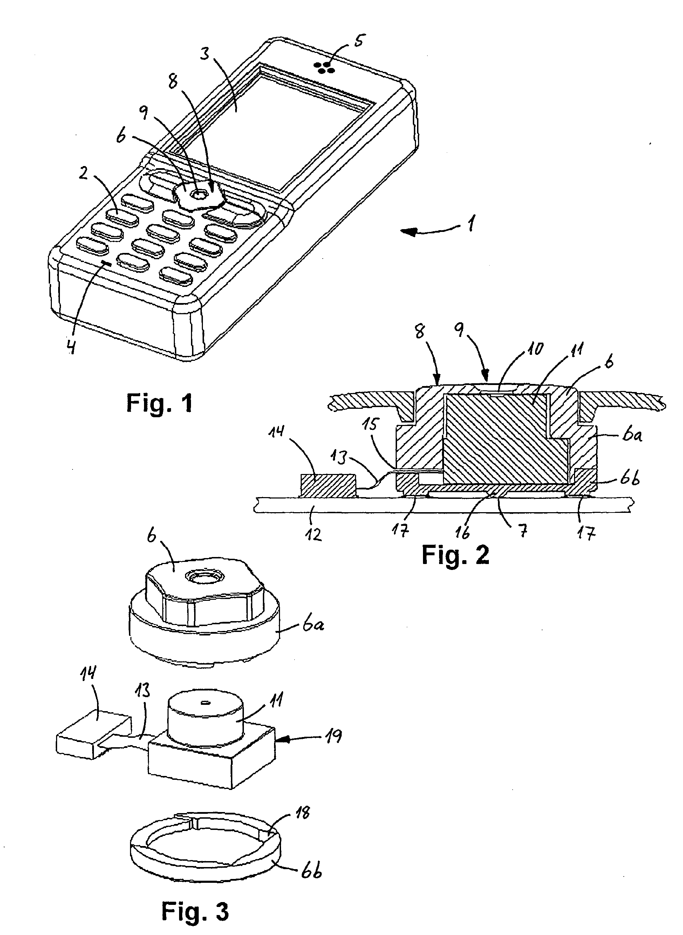

Fig. 1 shows an electronic device in the form of a mobile or cellular telephone 1 provided with a plurality of key buttons 2, a display 3, a microphone 4 and a speaker 5 as it is generally known in the art of mobile telephones. It should be emphasized that the invention is not restricted to mobile telephones, but applies to all kinds of electronic devices provided with at least one key button. However, the invention is particular relevant in relation to portable electronic communications devices, such as mobile telephones, and is therefore exemplified in relation to such an electronic device.

The mobile telephone 1 is provided with a plurality of key buttons 2, such as key buttons provided with numbers 0-9 and key buttons allocated to other specific functions. One of these other key buttons is provided with reference numeral 6, and is in the shown example a so-called navigation key that is tillable about a centre point 7 as shown in more detail in Fig. 2. The navigation key is allocated for navigating through menus or graphic images that are displayed on the display 3.

The key button 6 has a front surface 8 that is provided with a transparent area 9 at its centre. In the shown embodiment the transparent area 9 is formed by an opening 10. In other embodiments the transparent area 9 may comprise a transparent material provided in the opening 10, or the key button 6 itself may be made of a transparent material, in which case the opening 10 can be dispensed with.

As best seen in Fig. 2, a camera 11 is positioned underneath the transparent area 9, which camera 11 is adapted to record an image through the transparent area 9. In the embodiment shown in Fig. 2, the main portion of the camera 11 is positioned within the key button 6 while it is electrically connected to a PCB 12 (printed circuit board) provided in the mobile telephone 1 via flexible wires 13 and a connector part 14.

The key button 6 comprises two separate parts - a top part forming a hollow body 6a and a bottom part 6b as shown in Figs 2 and 3 - and the camera 11 is located between these two parts. A narrow opening 15 is provided between hollow body 6a and the bottom part 6b, which opening gives access for the flexible wires 13 as shown in Fig. 2. Positioning the camera 11 within the space defined by the hollow body 6a and the bottom part 6b ensures that the camera 11 is well encapsulated and thereby protected by the key button 6.

The bottom part 6a of the key button 6 is provided with a downwardly protruding knob 16 at its centre, which knob 16 in the assembled state abuts on the PCB 12 as shown in Fig. 2 and allows the key button 6 to be tiltable about the centre point 7 as mentioned above. Preferably four dome switches 17 are arranged on the PCB 12 for registering the direction of tilting of the key button 6 when it is depressed during the navigation process.

The key button parts 6a,6b have inner configurations that are complementary to the outer configuration of the camera 11. This is best seen in Fig. 3 which shows that the bottom part 6b is provided with indentations 18 adapted to receive the corners 19 of the rectangular base portion of the camera 11. Likewise, the hollow body 6a is configured to accommodate the main part of the camera 11 as shown in Fig. 2.

When an image is to be recorded using the camera 11, the front surface 8 of the key button 6 is directed towards the object to be recorded. By activating an image recording function, the camera 11 records the desired image through the transparent area 9 of the key button 6. The image may be stored in the mobile telephone as a still photo or as a video sequence, or it may be transmitted as a live picture to another communications device, e.g. if the mobile telephone 1 is used in a video conference. The image may of course be shown on the display 3.

If the mobile telephone 1 is to be used in a video conference the key button 6 should be positioned as close to the display 3 as possible in order to give the participants of the video conference the impression of facing each other directly.

As mentioned above, the invention is not restricted for use in a mobile telephone. Other - preferably small-sized portable electronic devices, such as PDAs (personal digital assistants), pages, etc. - may be provided with a camera that is positioned in or underneath a key button in accordance with the invention. However, if suitable for some reason the invention may also be applied in larger electronic devices, e.g. for concealing that the device comprises a camera.

The key button provided with the transparent area may of course be designed differently from the one shown in Figs 1-3. For instance, the key button may be of the conventional depressable type, or it may be a so-called soft-touch button that is not depressable at all. In the latter case the camera is located underneath the key button and not in the key button as it is exemplified in the embodiment shown in Figs 1-3.

## Claims

1. A wireless electronic communications device suitable for video conferencing comprising a display (3), a set of key buttons (2) including at least one navigation key (6) movable in a plurality of directions, and a camera (11) for recording an image, said at least one navigation key (6) having a front surface (8), and being arranged in the vicinity of the display (3), **characterised in that** the at least one navigation key (6) is provided with a transparent area (9) at the front surface (8), and that the camera (11) is located behind said transparent area (9).

2. A wireless electronic communications device according to claim 1, **characterised in that** the transparent area (9) comprises an opening (10) in the navigation key (6).

3. A wireless electronic communications device according to claim 3, **characterised in that** the navigation key (6) is depressible.

4. A wireless electronic communications device according to claim 1, **characterised in that** the navigation key (6) is arranged tiltably about a centre point (7).

5. A wireless electronic communications device according to any one of claims 1-4, **characterised in that** the navigation key (6) comprises a hollow body (6a), and that at least a part of the camera (11) is located in the hollow body (6a) of the navigation key (6).

6. A wireless electronic communications device according to claim 5, **characterised in that** the camera (11) is connected to a PCB (printed circuit board) (12) provided in the electronic device via flexible wires (13).

7. A wireless electronic communications device according to any one of claims 1-6, **characterised in that** the wireless electronic communications device is a mobile telephone (1).

## Patentansprüche

1. Kabellose elektronische Kommunikationsvorrichtung, geeignet für Videokonferenzen, umfassend eine Anzeige (3), einen Satz Tasten (2) einschließlich mindestens einer Navigationstaste (6), die in mehreren Richtungen beweglich ist, und eine Kamera (11) zur Aufnahme eines Bildes, wobei die mindestens eine Navigationstaste (6) eine vordere Oberfläche (8) aufweist und in der Nähe der Anzeige (3)angeordnet ist, **dadurch gekennzeichnet, dass** die mindestens eine Navigationstaste (6) mit einem transparenten Bereich (9) in der vorderen Oberfläche (8) versehen ist, und dass die Kamera (11) hinter dem transparenten Bereich (9) angeordnet ist.

2. Kabellose elektronische Kommunikationsvorrichtung nach Anspruch 1, **dadurch gekennzeichnet, dass** der transparente Bereich (9) eine Öffnung (10) in der Navigationstaste (6) umfasst.

3. Kabellose elektronische Kommunikationsvorrichtung nach Anspruch 3, **dadurch gekennzeichnet, dass** die Navigationstaste (6) niederdrückbar ist.

4. Kabellose elektronische Kommunikationsvorrichtung nach Anspruch 1, **dadurch gekennzeichnet, dass** die Navigationstaste (6) kippbar um einen Mittelpunkt (7) herum ist angeordnet ist.

5. Kabellose elektronische Kommunikationsvorrichtung nach einem der Ansprüche 1-4, **dadurch gekennzeichnet, dass** die Navigationstaste (6) einen hohlen Körper (6a) umfasst, und dass ein Teil der Kamera (11) in dem hohlen Körper (6a) der Navigationstaste (6) angeordnet ist.

6. Kabellose elektronische Kommunikationsvorrichtung nach Anspruch 5, **dadurch gekennzeichnet, dass** die Kamera (5) mit einem PCB (gedruckte Leiterplatte) (12) verbunden ist, das in der elektronischen Vorrichtung über flexible Drähte (13) vorgesehen ist.

7. Kabellose elektronische Kommunikationsvorrichtung nach einem der Ansprüche 1-6, **dadurch gekennzeichnet, dass** die kabellose elektronische Kommunikationsvorrichtung ein Mobiltelefon (1) ist.

## Revendications

1. Dispositif de communication électronique sans fil, convenant pour la vidéoconférence, comprenant un écran d'affichage (3), un ensemble de boutons de touches (2) comprenant au moins une touche de navigation (6) pouvant être déplacée dans une pluralité de directions, et une caméra (11) destinée à enregistrer une image, ladite au moins une touche de navigation (6) possédant une surface frontale (8) et étant implantée à proximité de l'écran d'affichage (3), **caractérisé en ce que** ladite au moins une touche de navigation (6) est dotée d'une zone transparente (9) dans la surface frontale (8) et **en ce que** la caméra (11) est située derrière cette zone transparente (9).

2. Dispositif de communication électronique sans fil selon la revendication 1, **caractérisé en ce que** la zone transparente (9) comprend une ouverture (10) dans la touche de navigation (6).

3. Dispositif de communication électronique sans fil selon la revendication 3, **caractérisé en ce que** la touche de navigation (6) peut être enfoncée.

4. Dispositif de communication électronique sans fil selon la revendication 1, **caractérisé en ce que** la touche de navigation (6) est montée de manière à pouvoir basculer par rapport à un point central (7).

5. Dispositif de communication électronique sans fil selon l'une quelconque des revendications 1 à 4, **caractérisé en ce que** la touche de navigation (6) comprend un corps creux (6a) et **en ce qu'**au moins une partie de la caméra (11) est située dans le corps creux (6a) de la touche de navigation (6).

6. Dispositif de communication électronique sans fil selon la revendication 5, **caractérisé en ce que** la caméra (11) est connectée via des fils flexibles (13) à une carte de circuits imprimés (PCB pour printed circuit board) (12) implantée dans le dispositif électronique.

7. Dispositif de communication électronique sans fil selon l'une quelconque des revendications 1 à 6, **caractérisé en ce que** le dispositif de communication électronique sans fil est un téléphone mobile (1).
